Europäisches Patentamt

European Patent Office

Office européen des brevets

(19)

(11) Veröffentlichungsnummer : **0 451 511 B1**

(12)

# EUROPÄISCHE PATENTSCHRIFT

(45) Veröffentlichungstag der Patentschrift :
18.05.94 Patentblatt 94/20

(51) Int. Cl.$^5$ : **C01B 25/30**

(21) Anmeldenummer : **91103655.6**

(22) Anmeldetag : **09.03.91**

(54) **Verfahren zur Herstellung von Alkaliphosphatlösungen.**

(30) Priorität : **11.04.90 DE 4011716**

(43) Veröffentlichungstag der Anmeldung :
**16.10.91 Patentblatt 91/42**

(45) Bekanntmachung des Hinweises auf die
Patenterteilung :
**18.05.94 Patentblatt 94/20**

(84) Benannte Vertragsstaaten :
**BE DE ES FR GB IT NL SE**

(56) Entgegenhaltungen :
**EP-A- 0 129 784**
**US-A- 2 053 319**

(73) Patentinhaber : **HOECHST
AKTIENGESELLSCHAFT
D-65926 Frankfurt (DE)**

(72) Erfinder : **Schimmel, Günther, Dr.
Ehrenstrasse 16
W-5042 Erftstadt (DE)**
Erfinder : **Staffel, Thomas, Dr.
Gennerstrasse 153
W-5030 Hürth (DE)**
Erfinder : **Gradl, Reinhard, Dr.
Heimbacher Weg 27
W-5042 Erftstadt (DE)**

EP 0 451 511 B1

**Beschreibung**

Die vorliegende Erfindung betrifft ein Verfahren zur Herstellung von Alkaliphosphatlösungen, welche durch Aufschluß von Rohphosphat mit Schwefelsäure, Abtrennung des Calciumsulfates von der Rohphosphorsäure, Versetzen der Rohphosphorsäure mit einer Alkaliverbindung und Abtrennung des dadurch ausgefällten Feststoffes sowie Neutralisieren der vorgereinigten Rohphosphorsäure bis zu einem pH-Wert von mindestens 7 und Abtrennung des dabei anfallenden Feststoffes gewonnen wurden und welche einen Fluorgehalt von weniger als 20 ppm, bezogen auf $P_2O_5$, aufweisen.

Bei der Neutralisation von Rohphosphorsäure wird eine Alkaliphosphatlösung, deren Kationengehalte hinreichend niedrig sind, nur dann erhalten, wenn die Neutralisation bis mindestens pH 7 erfolgt ist. Bei kleineren pH-Werten sind die Kationen nur teilweise ausgefällt.

Beim Verfahren zur Reinigung von Alkaliphosphatlösungen nach der US-A-2 053 319 wird in eine heiße Natriumphosphatlösung in Wasser suspendiertes Aluminiumhydroxid oder eine wäßrige Suspension von Aluminiumhydroxid und Calciumhydroxid unter Rühren eingetragen. Nach Abkühlen der Mischung und Abtrennen des Feststoffes wird eine Natriumphosphatlösung mit niedrigem Fluorgehalt erhalten.

Schließlich ist aus der US-A-4 620 966 ein Verfahren zur Entfluorierung von Alkaliphosphatlösungen bekannt, bei welchem zunächst Naßverfahrensphosphorsäure mit Alkalilauge bis zu einem pH-Wert oberhalb von 6 neutralisiert und vom ausgefallenen ersten Niederschlag abfiltriert wird. In das auf 60 bis 120°C erhitzte und gerührte Filtrat wird eine Erdalkaliverbindung, die in Wasser von 20°C eine Löslichkeit von mehr als 0,01 Mol Metallion/1 aufweist, eingetragen und vom ausfallenden zweiten Niederschlag abfiltriert.

Nachteilig ist bei den bekannten Verfahren der relativ hohe Fluorgehalt in den entfluorierten Alkaliphosphatlösungen, der sie für die Verwendung im Lebensmittelbereich ungeeignet macht.

Es ist daher Aufgabe der vorliegenden Erfindung, ein Verfahren zur Herstellung von aus Naßphosphorsäure gewonnenen Alkaliphosphatlösungen anzugeben, deren auf ihren $P_2O_5$-Gehalt bezogener Fluorgehalt unter 20 ppm liegt. Das wird erfindungsgemäß dadurch erreicht, daß man Alkaliphosphatlösungen mit einem $P_2O_5$-Gehalt von 10 bis 30 Gewichts% mit Phosphorsäure auf einen pH-Wert zwischen 4,8 und 6,0 zurückstellt; daß man nach Erhitzen der Lösungen auf 60 bis 120°C, vorzugsweise von 80 bis 100°C, in die Alkaliphosphatlösungen 1 bis 6 Gewichts%, bezogen auf das Gewicht der Lösung, einer Erdalkali-Sauerstoff-Verbindung unter Rühren einträgt und daß man den ausgeschiedenen Feststoff nach einer Verweilzeit von 0,5 bis 4 Stunden von den Alkaliphosphatlösungen abtrennt.

Das Verfahren gemäß der Erfindung kann weiterhin wahlweise auch noch dadurch ausgestaltet sein, daß
a) man die Alkaliphosphatlösungen mit Phosphorsäure auf einen pH-Wert von 5,2 bis 5,8 zurückstellt;
b) man als Erdalkali-Sauerstoff-Verbindung Calciumnitrat verwendet;
c) man als Erdalkali-Sauerstoff-Verbindung Calciumhydroxid verwendet;
d) man als Erdalkali-Sauerstoff-Verbindung Calciumoxid verwendet;
e) die Erdalkali-Sauerstoff-Verbindungen Körnungen von 1 bis 20 μm aufweisen.

Die mit dem erfindungsgemäßen Verfahren erhältlichen Alkaliphosphatlösungen weisen Lebensmittelqualität auf.

Beim Verfahren gemäß der Erfindung kann zum Zurückstellen der Alkaliphosphatlösungen sowohl sog. thermische Phosphorsäure (durch Verbrennen von gelbem Phosphor zu $P_4O_{10}$ und seine Adsorption in verdünnter Phosphorsäure erhalten) als auch vorgereinigte sog. Naßverfahrensphosphorsäure (durch Aufschluß von Rohphosphat mit Schwefelsäure und Abfiltrieren des Calciumsulfates erhalten) verwendet werden.

Beispiel 1 (Vergleichsbeispiel)

Eine südafrikanische Naßverfahrensphosphorsäure (Hersteller: Fa. Fedmis) mit 47,8 Gewichts% $P_2O_5$ wurde mit Wasser auf einen $P_2O_5$-Gehalt von 30 Gewichts% verdünnt und dann mit Natronlauge bis pH 7 neutralisiert. Nach Abtrennung des Neutralisationsniederschlages wurde eine Natriumphosphatlösung mit 18,8 Gewichts% $P_2O_5$ und einem auf $P_2O_5$ bezogenen Fluorgehalt von 673 ppm erhalten. Das Filtrat wurde auf 100°C erhitzt und unter Rühren mit 1 bis 5 Gewichts% $Ca(OH)_2$, bezogen auf das Gewicht des Filtrates, versetzt und die sich ausbildende Fällung nach einer Verweilzeit von 2 Stunden heiß abfiltriert. Die Reduzierung des Fluorgehaltes ist der folgenden Tabelle zu entnehmen.

| Ca(OH)$_2$-Zugabe [Gewichts%] | Filtrat | |
|---|---|---|
| | P$_2$O$_5$ [Gewichts%] | F [ppm/P$_2$O$_5$] |
| 1 | 18,6 | 250 |
| 2 | 18,6 | 92 |
| 3 | 18,6 | 92 |
| 4 | 18,4 | 56 |
| 5 | 17,6 | 23 |

**Beispiel 2 (gemäß der Erfindung)**

Beispiel 1 wurde mit der Änderung wiederholt, daß die Natriumphosphatlösung vor der Zugabe des Ca(OH)$_2$ mit thermischer Phosphorsäure (54,3 Gewichts% P$_2$O$_5$) auf pH 6 zurückgestellt wurde. Die zurückgestellte Lösung enthielt dann 21,0 Gewichts% P$_2$O$_5$ und 553 ppm F/P$_2$O$_5$.
Die Reduzierung des Fluorgehaltes ist der folgenden Tabelle zu entnehmen.

| Ca(OH)$_2$-Zugabe [Gewichts%] | Filtrat | |
|---|---|---|
| | P$_2$O$_5$ [Gewichts%] | F [ppm/P$_2$O$_5$] |
| 1,9 | 20,1 | 19 |
| 2,8 | 20,3 | 11 |
| 3,8 | 19,5 | 12 |
| 4,7 | 18,4 | 8 |

**Beispiel 3 (Vergleichsbeispiel)**

Eine Natriumphosphatlösung mit einem pH-Wert von 8, welche aus aus Palaborwa-Phosphat gewonnener Naßverfahrensphosphorsäure hergestellt worden war und welche 18,2 Gewichts% P$_2$O$_5$ und 730 ppm F/P$_2$O$_5$ enthielt, wurde bei 90°C unter Rühren mit Ca(OH)$_2$ bzw. Ca(NO$_3$)$_2$ versetzt. Die sich ausbildende Fällung wurde nach einer Verweilzeit von 1,5 Stunden heiß abfiltriert.
Die Reduzierung des Fluorgehaltes ist der folgenden Tabelle zu entnehmen.

| Zugabe von | | Filtrat | |
|---|---|---|---|
| Ca(OH)$_2$ | Ca(NO$_3$)$_2$ [Gewichts%] | P$_2$O$_5$ [Gewichts%] | F [ppm/P$_2$O$_5$] |
| 2 | – | 17,8 | 225 |
| 4 | – | 17,8 | 135 |
| – | 2 | 17,6 | 170 |
| – | 4 | 17,7 | 113 |

**Beispiel 4 (gemäß der Erfindung)**

Beispiel 3 wurde mit der Änderung wiederholt, daß die Natriumphosphatlösung vor der Zugabe der Calciumverbindung mit thermischer Phosphorsäure (54,3 Gewichts% P$_2$O$_5$) auf pH 5,8 zurückgestellt wurde. Die zurückgestellte Lösung enthielt dann 23,2 Gewichts% P$_2$O$_5$ und 496 ppm F/P$_2$O$_5$.

Die Reduzierung des Fluorgehaltes ist der folgenden Tabelle zu entnehmen.

| Zugabe von | | Filtrat | |
|---|---|---|---|
| $Ca(OH)_2$ | $Ca(NO_3)_2$ | $P_2O_5$ | F |
| [Gewichts%] | | [Gewichts%] | [ppm/$P_2O_5$] |
| 2 | - | 23,1 | 18 |
| 4 | - | 22,9 | 11 |
| - | 2 | 23,4 | 15 |
| - | 4 | 23,1 | 12 |

Beispiel 5 (gemäß der Erfindung)

Beispiel 4 wurde mit der Änderung wiederholt, daß die Zurückstellung der Natriumphosphatlösung mit der in Beispiel 1 eingesetzten Naßverfahrensphosphorsäure erfolgte. Die zurückgestellte Lösung enthielt dann 21,8 Gewichts% $P_2O_5$ und 780 ppm F/$P_2O_5$; aus ihr fielen Hydroxide und Phosphate mehrwertiger Metalle aus. In die Suspension wurden bei 90°C unter Rühren $Ca(OH)_2$ bzw. $Ca(NO_3)_2$ eingetragen. Von der in der Lösung enthaltenen Fällung wurde nach einer Verweilzeit von 1 Stunde heiß abfiltriert.
Die Reduzierung des Fluorgehaltes ist der folgenden Tabelle zu entnehmen.

| Zugabe von | | Filtrat | |
|---|---|---|---|
| $Ca(OH)_2$ | $Ca(NO_3)_2$ | $P_2O_5$ | F |
| [Gewichts%] | | [Gewichts%] | [ppm/$P_2O_5$] |
| 3 | - | 21,5 | 19 |
| 4 | - | 21,3 | 15 |
| - | 3 | 21,4 | 17 |
| - | 4 | 21,2 | 14 |

**Patentansprüche**

1.  Verfahren zur Herstellung von Alkaliphosphatlösungen mit einem auf $P_2O_5$ bezogenen Fluorgehalt von weniger als 20 ppm durch Aufschluß von Rohphosphat mit Schwefelsäure, Abtrennung des Calciumsulfates von der Rohphosphorsäure, Versetzen der Rohphosphorsäure mit einer Alkaliverbindung und Abtrennung des dadurch ausgefällten Feststoffes sowie Neutralisieren der vorgereinigten Rohphosphorsäure bis zu einem pH-Wert von mindestens 7 und Abtrennung des dabei anfallenden Feststoffes, dadurch gekennzeichnet, daß man Alkaliphosphatlösungen mit einem $P_2O_5$-Gehalt von 10 bis 30 Gewichts% mit Phosphorsäure auf einen pH-Wert zwischen 4,8 und 6,0 zurückstellt; daß man nach Erhitzen der Lösungen auf 60 bis 120°C, vorzugsweise von 80 bis 100°C, in die Alkaliphosphatlösungen 1 bis 6 Gewichts%, bezogen auf das Gewicht der Lösung, einer Erdalkali-Sauerstoff-Verbindung unter Rühren einträgt und daß man den ausgeschiedenen Feststoff nach einer Verweilzeit von 0,5 bis 4 Stunden von den Alkaliphosphatlösungen abtrennt.

2.  Verfahren nach Anspruch 1, dadurch gekennzeichnet, daß man die Alkaliphosphatlösungen mit Phosphorsäure auf einen pH-Wert von 5,2 bis 5,8 zurückstellt.

3.  Verfahren nach Anspruch 1 oder 2, dadurch gekennzeichnet, daß man als Erdalkali-Sauerstoff-Verbindung Calciumnitrat verwendet.

EP 0 451 511 B1

4. Verfahren nach Anspruch 1 oder 2, <u>dadurch gekennzeichnet</u>, daß man als Erdalkali-Sauerstoff-Verbindung Calciumhydroxid verwendet.

5. Verfahren nach Anspruch 1 oder 2, <u>dadurch gekennzeichnet</u>, daß man als Erdalkali-Sauerstoff-Verbindung Calciumoxid verwendet.

6. Verfahren nach Anspruch 4 oder 5, <u>dadurch gekennzeichnet</u>, daß die Erdalkali-Sauerstoff-Verbindungen Körnungen von 1 bis 20 μm aufweisen.

Claims

1. A process for the preparation of an alkali metal phosphate solution having a fluorine content of less than 20 ppm, based on $P_2O_5$, by digesting crude phosphate using sulfuric acid, separating off the calcium sulfate from the crude phosphoric acid, adding an alkali metal compound to the crude phosphoric acid and separating off the solid precipitated thereby, and neutralizing the prepurified crude phosphoric acid to a pH of at least 7 and separating off the solid formed during this operation, which comprises adjusting the alkali metal phosphate solution having a $P_2O_5$ content of from 10 to 30% by weight to a pH of between 4.8 and 6.0 using phosphoric acid and heating the solution to from 60 to 120°C, preferably from 80 to 100°C, adding from 1 to 6% by weight, based on the weight of the solution, of an alkaline earth metal oxygen compound to the alkali metal phosphate solution with stirring, and, after a residence time of from 0.5 to 4 hours, separating off the precipitated solid from the alkali metal phosphate solution.

2. The process as claimed in claim 1, wherein the alkali metal phosphate solution is adjusted to a pH of from 5.2 to 5.8 using phosphoric acid.

3. The process as claimed in claim 1 or 2, wherein the alkaline earth metal oxygen compound used is calcium nitrate.

4. The process as claimed in claim 1 or 2, wherein the alkaline earth metal oxygen compound used is calcium hydroxide.

5. The process as claimed in claim 1 or 2, wherein the alkaline earth metal oxygen compound used is calcium oxide.

6. The process as claimed in claim 4 or 5, wherein the alkaline earth metal oxygen compound has a particle size of from 1 to 20 μm.

Revendications

1. Procédé de préparation de solutions de phosphates alcalins ayant une teneur en fluor inférieure à 20 ppm par rapport au $P_2O_5$ par dissolution de phosphate brut dans de l'acide sulfurique, séparation du sulfate de calcium de l'acide phosphorique brut, mélange de l'acide phosphorique brut et d'un composé alcalin et séparation de la matière solide ainsi obtenue ainsi que neutralisation de l'acide phosphorique brut purifié à un pH d'au moins 7 et séparation de la matière solide ainsi précipitée, caractérisé en ce qu'on diminue le pH des solutions de phosphates alcalins ayant une teneur en $P_2O_5$ de 10 à 30 % en poids avec de l'acide phosphorique à une valeur comprise entre 4,8 et 6,0; qu'on introduit sous agitation après chauffage des solutions entre 60 et 120°C, de préférence 80 et 100°C, dans les solutions de phosphates alcalins 1 à 6 % en poids, par rapport au poids de la solution, d'un composé de l'oxygène alcalino-terreux et qu'on sépare la matière solide déposée des solutions de phosphates alcalins après un temps de séjour de 0,5 à 4 h.

2. Procédé selon la revendication 1, caractérisé en ce qu'on diminue le pH des solutions de phosphates alcalins à l'aide d'acide phosphorique à une valeur de 5,2 à 5,8.

3. Procédé selon la revendication 1 ou 2, caractérisé en ce qu'on utilise du nitrate de calcium en tant que composé de l'oxygène alcalino-terreux.

5

4. Procédé selon la revendication 1 ou 2, caractérisé en ce qu'on utilise de l'hydroxyde de calcium en tant que composé de l'oxygène alcalino-terreux.

5. Procédé selon la revendication 1 ou 2, caractérisé en ce qu'on utilise de l'oxyde de calcium en tant que composé de l'oxygène alcalino-terreux.

6. Procédé selon la revendication 4 ou 5, caractérisé en ce que les composés de l'oxygène alcalino-terreux se présentent sous la forme de granulés de 1 à 20 µm.